# EUROPEAN PATENT SPECIFICATION

(11) **EP 4 552 466 B1**
(45) Date of publication and mention of the grant of the patent: **13.05.2026**
(21) Application number: 23209274.2
(22) Date of filing: 10.11.2023
(51) Int. Cl.: A01D 41/12, A01D 75/28, A01F 12/40

(54) **CHAFF PAN ARRANGEMENT FOR A COMBINE HARVESTER**
SPREUKASTENANORDNUNG FÜR EINEN MÄHDRESCHER
AGENCEMENT DE BAC À BALLES POUR MOISSONNEUSE-BATTEUSE

(43) Date of publication of application: 14.05.2025
(73) Proprietor: CNH Industrial Belgium N.V., 8210 Zedelgem (BE)
(72) Inventor: Deprauw, Jonas, 8210 Zedelgem (BE); Mommerency, Gilles, 8210 Zedelgem (BE); Vanderstichele, Michiel, 8210 Zedelgem (BE); Bailliu, Stijn, 8210 Zedelgem (BE); Desmet, Stefaan, 8210 Zedelgem (BE)
(74) Representative: CNH Industrial IP Department

(56) References cited:
- EP-A1- 1 316 249
- EP-A1- 3 132 670
- EP-A1- 3 275 304

## Description

### TECHNICAL FIELD

The present invention relates to a combine harvester comprising a cleaning system and a residue spreader. The cleaning system comprises at least one cleaning sieve for separating chaff from clean grain, and is arranged for oscillating in a fore-to-aft manner. The residue spreader is arranged for receiving separated chaff from the at least one cleaning sieve and for spreading the separated chaff over a field.

### BACKGROUND

Modern agricultural harvesters are complex machines with many structural and functional parts, arranged to perform a plurality of different functions related to the harvesting of specific crops or types of crops. A combine harvester, for example, is equipped with a plurality of functional units for the harvesting and processing of grain and grain-like crops. The main functions of a combine harvester include the cutting and taking in of the crop, threshing the grains from the stalks in a threshing section, separating the chaff from the grain kernels in a cleaning section, and releasing the straw and chaff residue from the harvester.

The cleaning section typically comprises a grain pan for receiving a mixture of threshed grain, chaff, and other small material other than grain (MOG) from the threshing section. From the grain pan, this mixture is transported to a set of sieves comprising an upper sieve and a lower sieve that lets the grain kernels fall through, while the chaff and other MOG is transported rearwards. The chaff residue may then be spread behind the combine harvester by two dedicated chaff spreaders, or mixed with the straw residue to be spread over the field together with the straw residue.

To ensure that the chaff is delivered to the residue spreader and does not fall on the field directly behind the cleaning sieves, a chaff pan may be arranged between the cleaning sieve and the residue spreader for conveying the separated chaff from the cleaning system to the residue spreader. Ideally, the chaff is spread continuously and evenly along the full width of the header of the combine harvester. However, inconsistent progress of the chaff over the chaff pan may lead to undesirable variation in the amount of chaff that enters the residue spreader and is spread over the field. Furthermore, during harvesting, the left and right residue spreader may not always receive equal amounts of chaff residue. For example, a lateral incline of the field, an asymmetric delivery of grain and chaff from the threshing section onto the cleaning section, or an asymmetric intake of crop at the header of the combine harvester may result in an uneven lateral distribution of the chaff residue over the field.

A combine harvester according to the preamble of claim 1 is known from document EP 3 275 304 A1.

It is an aim of the present invention to improve the lateral distribution of chaff residue behind the combine harvester.

### SUMMARY OF THE INVENTION

According to an aspect of the invention there is provided a combine harvester comprising a cleaning system, a residue spreader, a chaff pan, and a chaff pan side shake system. The cleaning system comprises an upper sieve and a lower sieve for separating chaff from clean grain and is arranged for oscillating in a fore-to-aft manner. The residue spreader is arranged for receiving separated chaff from the cleaning system and for spreading the separated chaff over a field. The chaff pan is mechanically mounted to the upper sieve for oscillating in a fore-to-aft manner therewith, in a position downstream of the upper sieve and upstream of the residue spreader for conveying the separated chaff from the upper sieve to the residue spreader. The chaff pan side shake system is arranged to oscillate the chaff pan in a side-to-side manner.

The combination of mounting the chaff pan to the upper sieve and the multi-directional oscillation of the chaff pan results in a reliable and consistent transport of the chaff residue into the residue spreaders. In current combine harvesters, the chaff pan is often mounted to the lower sieve, such that it can receive chaff falling from both sieves. However, the inventors have found that mounting the chaff pan to the upper sieve promotes the transport of chaff towards the residue spreaders by increasing the inclination of the chaff pan. When combined with the fore-aft oscillation of the chaff pan, a consistent flow of chaff towards the spreaders is thus ensured.

On top of that, the lateral oscillation of the chaff pan causes a redistribution of the chaff while it slides from the cleaning system to the residue spreader. As a result asymmetric chaff distributions on the chaff pan are corrected before the chaff reaches the residue spreader, thereby ensuring that the chaff is evenly distributed over the field behind the combine harvester. It is noted that side shake systems have been used before for enabling side-to-side movement of the upper sieve in order to promote an efficient operation of the cleaning system and thereby increase its maximum capacity. An example of such a side shake system can, for example, be found in EP 3 132 670 A1. However, the side shake is normally applied to the upper sieve only. Sometimes, side shake is applied to the grain pan too. The lower sieve, to which the chaff pan is normally mounted, generally oscillates in the fore-aft direction only.

In an embodiment, the chaff pan side shake system is arranged to jointly oscillate the upper sieve and the chaff pan in a side-to-side manner. When a side shake system is already installed for the upper sieve, letting the chaff pan follow the upper sieve in its lateral oscillations is a low-cost and effective way to provide side-to-side reciprocal movement for the chaff pan too. This joint oscillation may, for example, be realised by mounting the chaff pan directly to a rear end of the upper sieve, or by doing so via a hinge.

Additionally or alternatively, the chaff pan side shake system may be arranged to oscillate the chaff pan independently of the upper sieve. By allowing side-to-side reciprocal movement of the chaff pan relative to the upper sieve that it is mounted to, it is made possible to control the lateral distribution of residue chaff on the chaff pan in a combine harvester having no side shake system for the upper sieve. In a combine harvester that does have a side shake system for the upper sieve, the independent control of the lateral oscillations of the chaff pan may allow for optimising both the chaff and grain distribution on the upper sieve and the residue chaff distribution on the chaff pan, without needing to find a compromise between optimal settings for each.

In some embodiments, the chaff pan side shake system may comprise a chaff pan side shake actuator and a mechanical link, linking the chaff pan side shake actuator to the chaff pan, and wherein the mechanical link is mounted to a central portion of the chaff pan. 'Mounted to the central portion' can herein be defined as either overlapping with or being positioned close to a centre line of the chaff pan, halfway between its two lateral ends. Alternatively, 'mounted to the central portion' can be defined as outside the left and right 25% of the total width of the chaff pan. By driving the lateral oscillations from the centre of the chaff pan, the balance and dynamics of the chaff pan are improved and wear is reduced.

Preferably, the chaff pan side shake actuator and/or the mechanical link is at least partly mounted underneath the chaff pan. Such an implementation of the chaff pan side shake system allows for a space-saving configuration that does not require the installation of any side shake arms to the outer frame of the chaff pan or upper sieve. Installing the chaff pan side shake actuator and the mechanical link underneath the chaff pan may further allow to drive the lateral oscillations from the centre of the chaff pan, thereby further improving balance and reducing wear.

Preferably, the combine harvester further comprises a distribution sensor for determining an input signal representative of a lateral distribution of the separated chaff on the chaff pan, and a control unit, operatively connected to the distribution sensor to receive the input signal therefrom and configured to control an operation of the chaff pan side shake system in dependence of the input signal. By measuring the lateral distribution of the separated chaff on the chaff pan, it is made possible to adjust the lateral oscillations of the chaff pan in such a way that any unevenness in this lateral distribution can immediately be corrected by adjusting the lateral oscillations.

For example, the control unit may be configured to adjust a frequency, a phase and/or an amplitude of a side-to-side oscillation of the chaff pan. In special embodiments, the control unit may be configured to adjust the operation of the chaff pan side shake system in such a way that a side to side movement in one direction takes place at a speed different from that of a side to side movement in the opposite direction. Such ways to control the nature and intensity of the side to side movement provide the system with advanced possibilities to control the dynamics of the chaff residue on the chaff pan and the lateral distribution of the chaff on the chaff pan resulting therefrom.

The distribution sensor may, for example, comprise at least one of, an image sensor for capturing images of an upper surface of the chaff pan, multiple pressure sensors, provided at different lateral locations of the upper sieve, multiple layer thickness sensors, provided at different lateral locations on the chaff pan, or a radar sensor, ultrasound sensor, or image sensor for monitoring a chaff distribution downstream of the residue spreader. Other types of sensors could be used for the same purpose. For example, example multiple weight sensors may be mounted below the chaff pan. While such weight sensors may not provide a detailed view on the lateral distribution of chaff on the chaff pan, they can be used for determining a left-right weight balance indicating any asymmetry of this distribution that may need correction.

The combine harvester may further comprise an inclination sensor for determining a lateral inclination of the combine harvester relative to a horizontal reference plane, the control unit being operatively connected to the inclination sensor and configured to control an operation of the chaff pan side shake system in dependence of the lateral inclination. Although an inclination sensor does not provide direct information about the distribution of the chaff residue over the chaff pan, uneven distribution of the residue chaff is often caused by the combine harvester driving over a field with a lateral inclination. As such, the inclination sensor may provide a useful prediction or estimate of the actual chaff distribution on the chaff pan, thereby allowing for control of the chaff pan side shake system to distribute the chaff more evenly.

### BRIEF DESCRIPTION OF THE DRAWINGS

Embodiments of the invention will now be described by way of example with reference to the accompanying drawings, in which:
Figure 1 schematically shows a combine harvester wherein the invention may be advantageously used;
Figure 2 shows a side view of a portion of a combine harvester including a chaff pan; and
Figure 3 shows an example of a drive system for a chaff pan side shake system.

### DETAILED DESCRIPTION

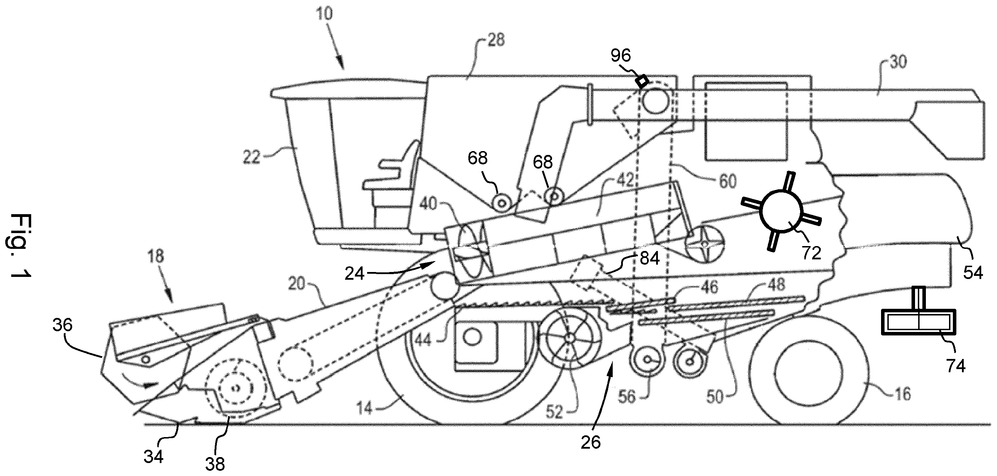

Figure 1 schematically shows a combine harvester 10. The combine harvester 10 generally includes front and rear round engaging wheels 14, 16, a header 18, a feeder 20, an operator cabin 22, a threshing and separation system 24, a cleaning system 26, a grain tank 28 and an unloading tube 30.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a chopper 72 and spread over the field across the full width of the header 18 by a spreader system 74. The spreader system 74 typically comprises a left and a right rotary spreader, each spreading the chopped crop residue received from the chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. A yield sensor 96 may be arranged in or near the grain elevator 60 for monitoring a volume of clean grain that is transported into the grain tank 28. Once in the grain tank 28, grain tank augers 68 at the bottom of the grain tank convey the cleaned grain laterally within the grain tank 28 to an unloading tube 30 for discharge from the combine harvester 10.

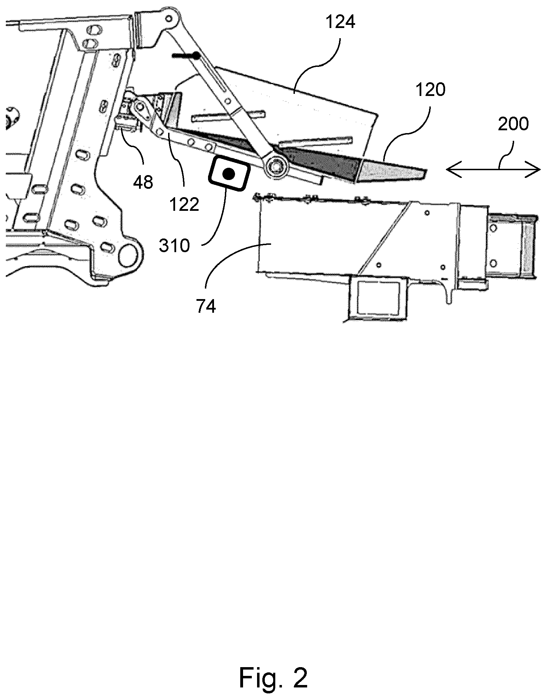

Figure 2 shows a side view of a portion of a combine harvester 10 including a chaff pan 120. The chaff pan 120 is mechanically mounted to the upper sieve 48 via a hingeable frame 122. In this drawing, the chaff pan 120 is shown in its operable position wherein it can convey the separated chaff from the upper sieve 48 to the residue spreader 74. The hingeable frame 122 makes it possible to fold the chaff pan 120 up into a service position when not in use. Side walls 124 may be provided at the lateral ends of the chaff pan 120 to assist in conveying the residue chaff towards the residue spreader 174. Because of the direct connection to the upper sieve 48, the chaff pan 120, when in use, oscillates in a fore-to-aft manner together with this sieve 48. The direction of this reciprocating movement is indicated in the drawing by an arrow 200. The inclination of the chaff pan 120, its reciprocating movement, and a push by new residue chaff coming from the upper sieve 48 together promote the transport of the residue chaff over the chaff pan 120, towards the residue spreader 74.

According to the invention, the combine harvester 10 further comprises a chaff pan side shake system for oscillating the chaff pan 120 in a side-to-side manner, in addition to the reciprocating motion in the fore-aft direction 200. This side shake can be realised in a number of different ways. For example, the side shake of the chaff pan 120 may be caused directly by a side shake of the upper sieve 48 that it is mounted to. Side shake systems for upper cleaning sieves 48 have been used before for promoting an efficient operation of the cleaning system 26 and increasing its maximum capacity. An example of such a side shake system can, for example, be found in EP 3 132 670 A1. When such an upper sieve side shake system is installed, the upper sieve 48 and the chaff pan 120 jointly oscillate in a side-to-side manner. Letting the chaff pan 120 follow the upper sieve 48 in its lateral oscillations is a low-cost and effective way to provide side-to-side reciprocal movement for the chaff pan 120 too.

Additionally or alternatively, the chaff pan side shake system may be arranged to oscillate the chaff pan 120 independently of the upper sieve 48. By allowing side-to-side reciprocal movement of the chaff pan 120 relative to the upper sieve 48 that it is mounted to, it is made possible to control the lateral distribution of residue chaff on the chaff pan 120 in a combine harvester 10 having no side shake system for the upper sieve 48. In a combine harvester 10 that does have a side shake system for the upper sieve 48, the independent control of the lateral oscillations of the chaff pan 120 may allow for simultaneously optimising the chaff and grain distribution on the upper sieve 48 and the residue chaff distribution on the chaff pan 120, without needing to find a compromise between optimal settings for each. The independent chaff pan side shake may, for example, be realised by an electric, pneumatic, or hydraulic actuator 310 that is connected between chaff pan support frame 122 and the chaff pan 120 itself.

The combination of mounting the chaff pan 120 to the upper sieve 48 and the multi-directional oscillation of the chaff pan 120 results in a reliable and consistent transport of the chaff residue into the residue spreader 74. In prior art combine harvesters 10, the chaff pan 120 is often mounted to the lower sieve 50, such that it can receive chaff falling from both sieves 48, 50. However, the inventors have found that mounting the chaff pan 120 to the upper sieve 48 promotes the transport of chaff towards the residue spreader 74 by increasing the inclination of the chaff pan 120. When combined with the fore-aft oscillation of the chaff pan 120, a consistent flow of chaff towards the spreader 74 is thus ensured. On top of that, the lateral oscillation of the chaff pan 120 causes a redistribution of the chaff while it slides from the cleaning system 26 to the residue spreader 74. As a result asymmetric chaff distributions on the chaff pan 120 are corrected before the chaff reaches the residue spreader 74, thereby ensuring that the chaff is evenly distributed over the field behind the combine harvester 10.

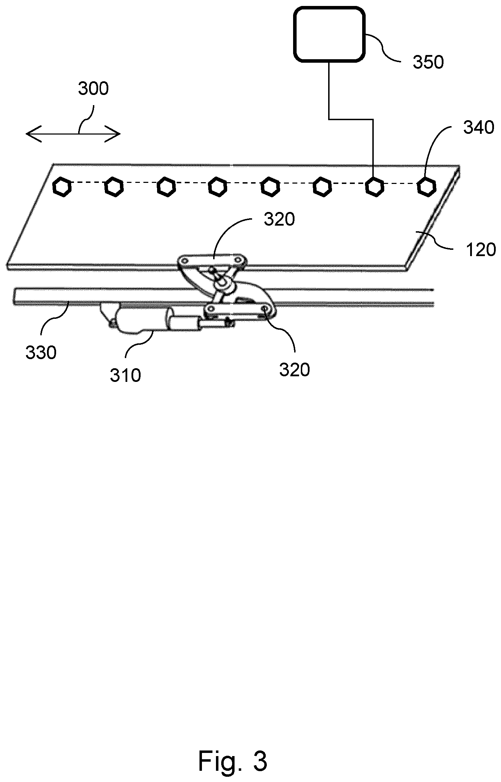

Figure 3 shows an example of a drive system for a chaff pan side shake system. The drive system comprises a chaff pan side shake actuator 310 and a mechanical link 320, linking the chaff pan side shake actuator 310 to the chaff pan 120. In this embodiment, the mechanical link 320 is mounted to a central portion of the chaff pan 120. 'Mounted to the central portion' can herein be defined as either overlapping with or being positioned close to a centre line of the chaff pan 120, halfway between its two lateral ends. Alternatively, 'mounted to the central portion' can be defined as outside the left and right 25% of the total width of the chaff pan 120. By driving the lateral oscillations from the centre of the chaff pan 120, the balance and dynamics of the chaff pan 120 are improved and wear is reduced. In other embodiments, the mechanical link 320 may be mounted closer to one of the lateral ends of the chaff pan 120. Alternatively, two mechanical links 320 may be used, both connected to the chaff pan side shake actuator 310 and each to a different lateral end of the chaff pan 120.

Preferably, the chaff pan side shake actuator 310 and/or the mechanical link 320 is at least partly mounted underneath the chaff pan 120. Such an implementation of the chaff pan side shake system allows for a space-saving configuration that does not require the installation of any side shake arms to the outer frame 122 of the chaff pan 122 or upper sieve 48. Installing the chaff pan side shake actuator 310 and the mechanical link 320 underneath the chaff pan 120 may further make it easier to drive the lateral oscillations from the centre of the chaff pan 120, thereby further improving balance and reducing wear.

Preferably, the combine harvester 10 further comprises one or more distribution sensors 340 for determining an input signal representative of a lateral distribution of the separated chaff on the chaff pan 120, and a control unit 350, operatively connected to the distribution sensors 340 to receive the input signal therefrom and configured to control an operation of the chaff pan side shake system in dependence of the input signal. By measuring the lateral distribution of the separated chaff on the chaff pan 120, it is made possible to adjust the lateral oscillations of the chaff pan 120 in such a way that any unevenness in this lateral distribution can immediately be corrected by adjusting the lateral oscillations.

For example, the control unit 350 may be configured to adjust a frequency, a phase and/or an amplitude of a side-to-side oscillation of the chaff pan 120. In special embodiments, the control unit 350 may be configured to adjust the operation of the chaff pan side shake system in such a way that a side to side movement in one direction takes place at a speed different from that of a side to side movement in the opposite direction. Such ways to control the nature and intensity of the side to side movement provide the system with advanced possibilities to control the dynamics of the chaff residue on the chaff pan 120 and the lateral distribution of the chaff on the chaff 120 pan resulting therefrom.

The distribution sensors 340 may, for example, comprise at least one of, an image sensor for capturing images of an upper surface of the chaff pan, multiple pressure sensors, provided at different lateral locations of the upper sieve, multiple layer thickness sensors, provided at different lateral locations on the chaff pan 120, or a radar sensor, ultrasound sensor, or image sensor for monitoring a chaff distribution downstream of the residue spreader 74. Other types of sensors could be used for the same purpose. For example, example multiple weight sensors may be mounted below the chaff pan 120. While such weight sensors may not provide a detailed view on the lateral distribution of chaff on the chaff pan 120, they can be used for determining a left-right weight balance indicating any asymmetry of this distribution that may need correction.

The combine harvester 10 may further comprise an inclination sensor for determining a lateral inclination of the combine harvester 10 relative to a horizontal reference plane, the control unit 350 being operatively connected to the inclination sensor and configured to control an operation of the chaff pan side shake system in dependence of the lateral inclination. Although an inclination sensor does not provide direct information about the distribution of the chaff residue over the chaff pan 120, uneven distribution of the residue chaff is often caused by the combine harvester 10 driving over a field with a lateral inclination. As such, the inclination sensor may provide a useful prediction or estimate of the actual chaff distribution on the chaff pan 120, thereby allowing for control of the chaff pan side shake system to distribute the chaff more evenly.

## Claims

1. A combine harvester (10) comprising:
a cleaning system (26) comprising an upper sieve (48) and a lower sieve (50) for separating chaff from clean grain, the upper sieve (48) and the lower sieve (50) being arranged for oscillating in a fore-to-aft manner;
a residue spreader (74), arranged for receiving separated chaff from the cleaning system (26) and for spreading the separated chaff over a field;
**characterised by**
a chaff pan (120), mechanically mounted to the upper sieve (48) for oscillating in a fore-to-aft manner therewith, in a position downstream of the upper sieve (48) and upstream of the residue spreader (74) for conveying the separated chaff from the upper sieve (48) to the residue spreader (74); and
a chaff pan side shake system, arranged to oscillate the chaff pan in a side-to-side manner.

2. A combine harvester (10) as claimed in claim 1, wherein the chaff pan side shake system is arranged to jointly oscillate the upper sieve (48) and the chaff pan (120) in a side-to-side manner.

3. A combine harvester (10) as claimed in claim 1 or 2, wherein the chaff pan side shake system is arranged to oscillate the chaff pan (120) independently of the upper sieve (48).

4. A combine harvester as claimed in any preceding claim, wherein the chaff pan side shake system comprises a chaff pan side shake actuator (310) and a mechanical link (320), linking the chaff pan side shake actuator (310) to the chaff pan (120), and wherein the mechanical link (320) is mounted to a central portion of the chaff pan (120).

5. A combine harvester as claimed in claim 4, wherein the chaff pan side shake actuator (310) and/or the mechanical link (320) is at least partly mounted underneath the chaff pan (120).

6. A combine harvester (10) as claimed in any preceding claim, further comprising:
a distribution sensor (340) for determining an input signal representative of a lateral distribution of the separated chaff on the chaff pan (120); and
a control unit (350), operatively connected to the distribution sensor (340) to receive the input signal therefrom and configured to control an operation of the chaff pan side shake system in dependence of the input signal.

7. A combine harvester (10) as claimed in claim 6, wherein the control unit (350) is configured to adjust a frequency, a phase and/or an amplitude of a side-to-side oscillation of the chaff pan (120).

8. A combine harvester (10) as claimed in claim 6 or 7, wherein the distribution sensor (340) comprises at least one of:
an image sensor for capturing images of an upper surface of the chaff pan (120);
multiple pressure sensors, provided at different lateral locations of the upper sieve (48);
multiple layer thickness sensors, provided at different lateral locations on the chaff pan (120); and
a radar sensor, ultrasound sensor, or image sensor for monitoring a chaff distribution downstream of the residue spreader (74).

9. A combine harvester (10) as claimed in any preceding claim, further comprising:
an inclination sensor for determining a lateral inclination of the combine harvester (10) relative to a horizontal reference plane; and
a control unit (350), operatively connected to the inclination sensor and configured to control an operation of the chaff pan side shake system in dependence of the lateral inclination.

## Patentansprüche

1. Mähdrescher (10), umfassend:
ein Reinigungssystem (26), das ein oberes Sieb (48) und ein unteres Sieb (50) zum Trennen von Spreu von sauberem Getreide umfasst, wobei das obere Sieb (48) und das untere Sieb (50) zum Schwingen in Vorwärts-Rückwärts-Richtung angeordnet sind;
eine Rückstandsstreuvorrichtung (74), die zum Empfangen von getrennter Spreu aus dem Reinigungssystem (26) und zum Verteilen der getrennten Spreu auf einem Feld angeordnet ist;
**gekennzeichnet durch**
eine Spreuwanne (120), die mechanisch an dem oberen Sieb (48) montiert ist, um damit in einer Vorwärts-Rückwärts-Richtung zu schwingen, in einer dem oberen Sieb (48) nachgelagerten und der Rückstandsstreuvorrichtung (74) vorgelagerten Position, um die getrennte Spreu von dem oberen Sieb (48) zu der Rückstandsstreuvorrichtung (74) zu transportieren; und
ein Spreuwannen-Seitenschüttelsystem, das angeordnet ist, um die Spreuwanne in einer Bewegung von Seite zu Seite zu schwingen.

2. Mähdrescher (10) nach Anspruch 1, wobei das Spreuwannen-Seitenschüttelsystem angeordnet ist, um das obere Sieb (48) und die Spreuwanne (120) gemeinsam von Seite zu Seite zu schwingen.

3. Mähdrescher (10) nach Anspruch 1 oder 2, wobei das Spreuwannen-Seitenschüttelsystem angeordnet ist, um die Spreuwanne (120) unabhängig von dem oberen Sieb (48) zu schwingen.

4. Mähdrescher nach einem der vorstehenden Ansprüche, wobei das Spreuwannen-Seitenschüttelsystem einen Spreuwannen-Seitenschüttelaktuator (310) und eine mechanische Verbindung (320) umfasst, die den Spreuwannen-Seitenschüttelaktuator (310) mit der Spreuwanne (120) verbindet, und wobei die mechanische Verbindung (320) an einem zentralen Abschnitt der Spreuwanne (120) montiert ist.

5. Mähdrescher nach Anspruch 4, wobei der Spreuwannen-Seitenschüttelaktuator (310) und/oder die mechanische Verbindung (320) zumindest teilweise unterhalb der Spreuwanne (120) montiert ist.

6. Mähdrescher (10) nach einem der vorstehenden Ansprüche, ferner umfassend: einen Verteilungssensor (340) zum Bestimmen eines Eingangssignals, das für eine seitliche Verteilung der getrennten Spreu auf der Spreuwanne (120) steht; und
eine Steuereinheit (350), die funktionell mit dem Verteilungssensor (340) verbunden ist, um das Eingangssignal von diesem zu empfangen, und die konfiguriert ist, um einen Betrieb des Spreuwannen-Seitenschüttelsystems in Abhängigkeit von dem Eingangssignal zu steuern.

7. Mähdrescher (10) nach Anspruch 6, wobei die Steuereinheit (350) konfiguriert ist, um eine Frequenz, eine Phase und/oder eine Amplitude eines Schwingens von Seite zu Seite der Spreuwanne (120) zu justieren.

8. Mähdrescher (10) nach Anspruch 6 oder 7, wobei der Verteilungssensor (340) mindestens eines der folgenden umfasst:
einen Bildsensor zum Erfassen von Bildern einer oberen Oberfläche der Spreuwanne (120);
mehreren Drucksensoren, die an verschiedenen seitlichen Stellen des oberen Siebs (48) bereitgestellt sind;
mehreren Schichtdickensensoren, die an verschiedenen seitlichen Stellen auf der Spreuwanne (120) bereitgestellt sind; und
einen der Rückstandsstreuvorrichtung (74) nachgelagerten Radarsensor, Ultraschallsensor oder Bildsensor zum Überwachen einer Spreuverteilung.

9. Mähdrescher (10) nach einem der vorstehenden Ansprüche, ferner umfassend:
einen Neigungssensor zum Bestimmen einer seitlichen Neigung des Mähdreschers (10) relativ zu einer horizontalen Referenzebene und
eine Steuereinheit (350), die funktionell mit dem Neigungssensor verbunden und konfiguriert ist, um einen Betrieb des Spreuwannen-Seitenschüttelsystems in Abhängigkeit von der seitlichen Neigung zu steuern.

## Revendications

1. Moissonneuse-batteuse (10) comprenant :
un système de nettoyage (26) comprenant un tamis supérieur (48) et un tamis inférieur (50) pour séparer les balles du grain propre, le tamis supérieur (48) et le tamis inférieur (50) étant agencés pour osciller d'avant en arrière ;
un épandeur de résidus (74), agencé pour recevoir les balles séparées du système de nettoyage (26) et pour répandre les balles séparées dans un champ ;
**caractérisée par**
un bac à balles (120), monté mécaniquement sur le tamis supérieur (48) pour osciller d'avant en arrière avec celui-ci, dans une position en aval du tamis supérieur (48) et
en amont de l'épandeur de résidus (74) pour transporter les balles séparées du tamis supérieur (48) vers l'épandeur de résidus (74) ; et
un système de secouage latéral de bac à balles, agencé pour faire osciller le bac à balles d'une manière horizontale.

2. Moissonneuse-batteuse (10) selon la revendication 1, dans laquelle le système de secouage latéral de bac à balles est agencé pour faire osciller conjointement le tamis supérieur (48) et le bac à balles (120) d'un côté à l'autre.

3. Moissonneuse-batteuse (10) selon la revendication 1 ou 2, dans laquelle le système de secouage latéral de bac à balles est agencé pour faire osciller le bac à balles (120) indépendamment du tamis supérieur (48).

4. Moissonneuse-batteuse selon l'une quelconque des revendications précédentes, dans laquelle le système de secouage latéral de bac à balles comprend un actionneur de secouage latéral de bac à balles (310) et un lien mécanique (320), reliant l'actionneur de secouage latéral de bac à balles (310) au bac à balles (120), et dans laquelle le lien mécanique (320) est monté sur une partie centrale du bac à balles (120).

5. Moissonneuse-batteuse selon la revendication 4, dans laquelle l'actionneur de secouage latéral de bac à balles (310) et/ou le lien mécanique (320) sont au moins partiellement montés sous le bac à balles (120).

6. Moissonneuse-batteuse (10) selon l'une quelconque des revendications précédentes, comprenant en outre :
un capteur de distribution (340) permettant de déterminer un signal d'entrée représentatif d'une distribution latérale des balles séparées sur le bac à balles (120) ;
et
une unité de commande (350), connectée de manière fonctionnelle au capteur de distribution (340) pour recevoir le signal d'entrée de celui-ci et configurée pour commander un fonctionnement du système de secouage latéral de bac à balles en fonction du signal d'entrée.

7. Moissonneuse-batteuse (10) selon la revendication 6, dans laquelle l'unité de commande (350) est configurée pour régler une fréquence, une phase et/ou une amplitude d'une oscillation horizontale du bac à balles (120).

8. Moissonneuse-batteuse (10) selon la revendication 6 ou 7, dans laquelle le capteur de distribution (340) comprend au moins l'un parmi :
un capteur d'image pour capturer des images d'une surface supérieure du bac à balles (120) ;
de multiples capteurs de pression, fournis à différents emplacements latéraux du tamis supérieur (48) ;
de multiples capteurs d'épaisseur de couche, fournis à différents emplacements latéraux sur le bac à balles (120) ; et
un capteur radar, un capteur à ultrasons ou un capteur d'image pour surveiller une distribution de balles en aval de l'épandeur de résidus (74).

9. Moissonneuse-batteuse (10) selon l'une quelconque des revendications précédentes, comprenant en outre :
un capteur d'inclinaison permettant de déterminer une inclinaison latérale de la moissonneuse-batteuse (10) par rapport à un plan de référence horizontal ; et
une unité de commande (350), connectée de manière fonctionnelle au capteur d'inclinaison et configurée pour commander un fonctionnement du système de secouage latéral de bac à balles en fonction de l'inclinaison latérale.
